# EUROPEAN PATENT APPLICATION

(11) **EP 4 757 086 A1**
(43) Date of publication of application: **10.06.2026**
(21) Application number: 25179876.5
(22) Date of filing: 30.05.2025
(51) Int. Cl.: H02B 1/56, H02B 7/06, H01F 27/02, H05K 7/20

(54) **HEAT DISSIPATION AND FLOW GUIDING MECHANISM AND CABINET INCLUDING SAME**

(30) Priority: 09.12.2024 CN 202423041318 U
(71) Applicant: Sungrow Power Supply Co., Ltd., Hefei, Anhui 230088 (CN)
(72) Inventor: ZHANG, Yayun, Hefei, Anhui (CN); WANG, Xiaohu, Hefei, Anhui (CN); ZHANG, Xianwei, Hefei, Anhui (CN); ZHENG, Hao, Hefei, Anhui (CN); PAN, Zhiyuan, Hefei, Anhui (CN); LV, Hao, Hefei, Anhui (CN); XIA, Yongzhao, Hefei, Anhui (CN); WANG, Bing, Hefei, Anhui (CN)
(74) Representative: Zacco Norway AS

(57) **Abstract**

A heat dissipation and flow guiding mechanism and a cabinet having the same are provided. The heat dissipation and flow guiding mechanism is configured for guiding a heat flow generated by an electrical device (10) and includes: a first enclosure structure (20) having a first accommodation cavity (22), and a second enclosure structure (30) located above the first enclosure structure (20) and having a flow guiding cavity (31). The first accommodation cavity (22) has a first opening (21) and is configured for mounting the electrical device (10), and the first accommodation cavity (22) is in communication with the flow guiding cavity (31) through the first opening (21). According to the present application, the influence of heat generated by a transformer in an exposed state in the related art on peripheral devices is effectively improved, and the heat dissipation capability of a transformer and an integrated all-in-one machine is further improved.

## Description

### FIELD

The present application relates to the technical field of electrical devices, and in particular, to a heat dissipation and flow guiding mechanism and a cabinet including the same.

### BACKGROUND

At present, an electrical device (such as a transformer) in a casing of a conventional integrated all-in-one machine, as a heat source, generates heat, which affects other devices of the all-in-one machine, and the heat source device lacks an effective heat dissipation and flow guiding path.

### SUMMARY

A main object of the present application is to provide a heat dissipation and flow guiding mechanism and a cabinet including the same, so as to prevent heat generated by an electrical device (such as a transformer) in an exposed state in the related art from affecting peripheral devices, and further improve the heat dissipation capability of the electrical device (such as a transformer) and an integrated all-in-one machine.

In order to achieve the above object, according to one aspect of the present application, a heat dissipation and flow guiding mechanism is provided for guiding a heat flow generated by an electrical device. The heat dissipation and flow guiding mechanism includes a first enclosure structure and a second enclosure structure. The first enclosure structure has a first accommodation cavity, and the first accommodation cavity has a first opening and is configured for mounting the electrical device. The second enclosure structure is located above the first enclosure structure and has a flow guiding cavity, the first accommodation cavity is in communication with the flow guiding cavity through the first opening.

In an embodiment, the first enclosure structure further has a second accommodation cavity, and the second accommodation cavity and the first accommodation cavity are arranged independently of each other. The number of the second accommodation cavity is one; or, the number of the second accommodation cavities is at least two, and the at least two second accommodation cavities are arranged around the first accommodation cavity.

In an embodiment, a height of the first accommodation cavity is greater than or equal to a height of the electrical device.

In an embodiment, the first enclosure structure further has a second opening, and at least part of the second opening is in communication with an air vent of the electrical device.

In an embodiment, the heat dissipation and flow guiding mechanism further includes a shielding structure which is movably provided on at least part of the second opening to shield or expose the at least part of the second opening.

In an embodiment, the first enclosure structure includes an enclosure plate and a partition plate. The enclosure plate includes a first plate body, a second plate body, a third plate body and a fourth plate body which are connected end to end and surround to define an enclosure cavity. The first plate body and the third plate body are arranged opposite to each other, and the second plate body and the fourth plate body are arranged opposite to each other. The partition plate is arranged into the enclosure cavity to divide the enclosure cavity into the first accommodation cavity and the second accommodation cavity. The second opening is formed in the enclosure plate.

In an embodiment, the number of the second opening is one; or, the number of the second openings is more than one, and the second openings are spaced apart from each other along at least one of a first direction, a second direction and a third direction.

In an embodiment, the number of the partition plate is one; or, the number of the partition plates is at least two, and the at least two partition plates are spaced apart from each other along at least one of the first direction, the second direction, and the third direction.

In an embodiment, the partition plate faces the second plate body, the air vent of the electrical device faces the first plate body and/or the third plate body, and the second enclosure structure is arranged on the partition plate, part of the first plate body, and part of the third plate body.

In an embodiment, the second opening is formed in the first plate body and/or the third plate body.

In an embodiment, the partition plate faces the first plate body, the air vent of the electrical device faces the second plate body and/or the fourth plate body, and the second enclosure structure is arranged on the partition plate, part of the second plate body, and part of the fourth plate body.

In an embodiment, the second opening is formed in the second plate body and/or the fourth plate body.

In an embodiment, an orthographic projection of the first opening on the flow guiding cavity is located within the flow guiding cavity.

In an embodiment, at least part of a projection of the air vent of the electrical device on the second opening is located within the second opening.

In an embodiment, the second enclosure structure includes a fifth plate body, a sixth plate body, a seventh plate body and an eighth plate body which are connected end to end. The fifth plate body and the seventh plate body are arranged opposite to each other, and the sixth plate body and the eighth plate body are arranged opposite to each other.

In an embodiment, the first enclosure structure and the second enclosure structure are detachably connected or integrally formed.

According to another aspect of the present application, a cabinet is provided, including the heat dissipation and flow guiding mechanism described above.

By applying the technical solutions of the present application, the heat dissipation and flow guiding mechanism is configured for guiding the heat flow generated by the electrical device, and includes the first enclosure structure and the second enclosure structure. The first enclosure structure has the first accommodation cavity, and the first accommodation cavity has the first opening and is configured for mounting the electrical device. The second enclosure structure is located above the first enclosure structure and has the flow guiding cavity, and the first accommodation cavity is in communication with the flow guiding cavity through the first opening. In this way, the second enclosure structure is arranged at the above position to function as a "chimney", and the heat flow generated by the electrical device (such as a transformer) is guided by the guide effect of the chimney. After the electrical device (such as a transformer) is mounted in the first accommodation cavity, heat dissipated from a surface of the electrical device is dissipated through the first accommodation cavity, the first opening and the flow guiding cavity in sequence, so as to prevent the heat from dissipating around and affecting the normal operation of other devices. Thus, the heat dissipation function of the heat dissipation and flow guiding mechanism is realized, thereby preventing heat generated by the electrical device (such as a transformer) in an exposed state in the related art from affecting the peripheral devices, and further improving the heat dissipation capability of the electrical device (such as a transformer) and the integrated all-in-one machine.

### BRIEF DESCRIPTION OF THE DRAWINGS

The drawings of the description which constitute part of the present application are used to provide a further understanding of the present application. Exemplary embodiments of the present application and descriptions thereof are used to illustrate the present application, and do not constitute an improper limitation to the present application.
FIG. 1 shows a three-dimensional structural schematic diagram of a heat dissipation and flow guiding mechanism according to an embodiment of the present application;
FIG. 2 shows a three-dimensional structural schematic diagram of the heat dissipation and flow guiding mechanism in FIG. 1 after a second enclosure structure is removed;
FIG. 3 shows a three-dimensional structural schematic diagram of the heat dissipation and flow guiding mechanism in FIG. 1, where a second enclosure structure is removed, and an inverter and a ring main cabinet are arranged therein;
FIG. 4 shows a three-dimensional structural schematic diagram of the heat dissipation and flow guiding mechanism in FIG. 1, where a shielding structure of the heat dissipation and flow guiding mechanism is in a fully-shielded state;
FIG. 5 shows a three-dimensional structural schematic diagram of the heat dissipation and flow guiding mechanism from another angle, where the shielding structure in FIG. 4 is in a fully-shielded state;
FIG. 6 shows a three-dimensional structural schematic diagram of a first enclosure structure of the heat dissipation and flow guiding mechanism in FIG. 1;
FIG. 7 is a three-dimensional structural schematic diagram of a heat dissipation and flow guiding mechanism according to another embodiment of the present application; and
FIG. 8 is a three-dimensional structural schematic diagram of the heat dissipation and flow guiding mechanism in FIG. 7 after a second enclosure structure is removed.

Reference numerals in the drawings are listed as follows:

| | | | |
|---|---|---|---|
| 10. | electrical device; | | |
| 20. | first enclosure structure; | 21. | first opening; |
| 22. | first accommodation cavity; | 23. | second accommodation cavity; |
| 24. | second opening; | 25. | first plate body; |
| 26. | second plate body; | 27. | third plate body; |
| 28. | fourth plate body; | 29. | partition plate; |
| 30. | second enclosure structure; | 31. | flow guiding cavity; |
| 32. | fifth plate body; | 33. | sixth plate body; |
| 34. | seventh plate body; | 35. | eighth plate body; |
| 40. | shielding structure; | | |
| 50. | inverter; | | |
| 60. | ring main unit. | | |

### DETAILED DESCRIPTION OF THE EMBODIMENTS

It should be noted that, the embodiments in the present application and the features in the embodiments may be combined with each other in the case of no conflict. The present application is described in detail below with reference to the accompanying drawings and in combination with the embodiments.

It should be noted that, unless otherwise specified, all technical and scientific terms used in the present application have the same meaning as commonly understood by those skilled in the art.

In the present application, in the case of not being described in the contrary, the orientation terms such as "upper" and "lower" are generally defined based on the directions shown in the drawings, or defined based on a vertical direction, an upright direction, or a gravity direction. Similarly, for the convenience of understanding and description, terms "left" and "right" generally refer to the left and right shown in the drawings. Terms "inner" and "outer" refer to the inside and outside relative to the contour of each component. However, the above orientation terms are not intended to limit the present application.

In order to reduce the influence of heat generated by an electrical device (such as a transformer) in an exposed state in the related art on peripheral devices, and improve the heat dissipation capability of the electrical device (such as a transformer) and an integrated all-in-one machine, a heat dissipation and flow guiding mechanism and a cabinet including the same are provided according to the present application.

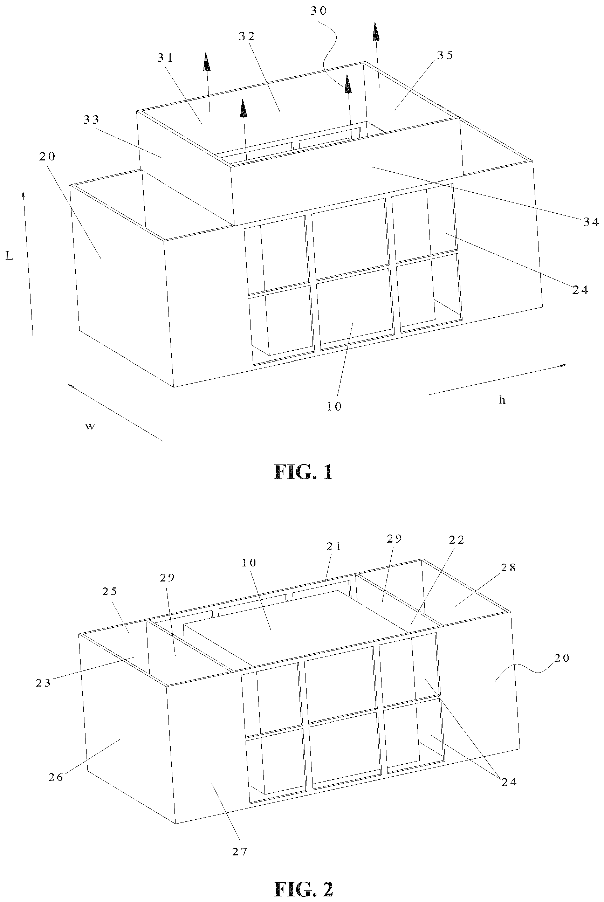

In an embodiment, as shown in FIG. 1 to FIG. 6, a heat dissipation and flow guiding mechanism is configured to dissipate heat from an electrical device 10, and includes a first enclosure structure 20 and a second enclosure structure 30. The first enclosure structure 20 has a first accommodation cavity 22, and the first accommodation cavity 22 has a first opening 21 and is configured for mounting the electrical device 10. The second enclosure structure 30 is located above the first enclosure structure 20 and has a flow guiding cavity 31, and the first accommodation cavity 22 is in communication with the flow guiding cavity 31 through the first opening 21.

By applying the technical solution of the embodiment, the second enclosure structure 30 is arranged at the above position to function as a "chimney", the heat flow generated by the electrical device 10 (such as a transformer) is guided by the diversion effect of the chimney. After the electrical device 10 (such as a transformer) is mounted in the first accommodation cavity 22, heat dissipated from a surface of the electrical device 10 is dissipated through the first accommodation cavity 22, the first opening 21 and the flow guiding cavity 31 in sequence, so as to prevent the heat from diffusing around and affecting the normal operation of other devices. Thus, the heat dissipation function of the heat dissipation and flow guiding mechanism is realized, thereby improving the influence of the heat generated by the electrical device (such as a transformer) in an exposed state in the related art on the peripheral device, and further improving the heat dissipation capability of the electrical device (such as a transformer) and the integrated all-in-one machine.

In the embodiment, the above arrangement of the second enclosure structure 30 can generate a chimney effect, which provides a guide effect for the heat dissipation of the electrical device (such as a transformer) and is beneficial to the heat dissipation of the electrical device (such as a transformer).

In the embodiment, the height of the second enclosure structure 30 may be set based on operational requirements, so as to increase the length of the flow guide path of the heat and prevent the heat from being sucked by other devices due to the fact that an outlet of heat is too close to other devices.

As shown in FIG. 2, FIG. 5 and FIG. 6, the first enclosure structure 20 further has a second accommodation cavity 23 which is independently arranged from the first accommodation cavity 22. In this way, the second accommodation cavity 23 is configured to accommodate other devices. Since the first accommodation cavity 22 and the second accommodation cavity 23 are arranged independently, the speed of heat diffusion via cavity walls of the first accommodation cavity 22 and the second accommodation cavity 23 can be slowed down, thereby preventing other devices arranged in the second accommodation cavity 23 from being affected by the heat and ensuring normal operation of other devices.

In an embodiment, the number of the second accommodation cavity 23 is one. Alternatively, the number of the second accommodation cavities 23 is at least two, and the at least two second accommodation cavities 23 are arranged around the first accommodation cavity 22. In this way, the number of the second accommodation cavities 23 may be flexibly selected, so as to meet different operational requirements and working conditions, and also improve the processing flexibility for the working personnel. Additionally, multiple second accommodation cavities can accommodate multiple peripheral devices, so as to improve the integration degree of the integrated all-in-one machine.

In the embodiment, the number of the second accommodation cavities 23 is two, and the two second accommodation cavities 23 are respectively located on two sides of the first accommodation cavity 22, so that the first enclosure structure 20 has a simple structure and is easy to process and implement.

It should be noted that the number of the second accommodation cavities 23 is not limited thereto, and may be determined based on working conditions and operational requirements. In some embodiments, the number of the second accommodation cavities 23 is three, four, five or more.

In an embodiment, a height of the first accommodation cavity 22 is greater than or equal to a height of the electrical device 10.

In the embodiment, the height of the first accommodation cavity 22 is greater than that of the electrical device 10. This arrangement ensures that the first enclosure structure 20 can enclose the periphery of the electrical device 10, so as to prevent heat from diffusing outward and ensure that all the heat is discharged from the flow guiding cavity 31.

In other embodiments not shown in the drawings, the height of the first accommodation cavity is equal to that of the electrical device.

In the embodiment, an orthographic projection of the first opening 21 on the flow guiding cavity 31 is located within the flow guiding cavity 31. In this way, the above arrangement ensures that the heat discharged from the first opening 21 can be discharged from the flow guiding cavity 31 in time, preventing the heat dissipation efficiency of the heat dissipation and flow guiding mechanism from being affected by the accumulation of heat at a junction between the first opening 21 and the flow guiding cavity 31.

It should be noted that the orthographic projection of the first opening 21 on the flow guiding cavity 31 is located within the flow guiding cavity 31, including an embodiment where the orthographic projection of the first opening 21 on the flow guiding cavity 31 is located on a cavity wall of the flow guiding cavity 31.

As shown in FIG. 1, FIG. 2 and FIG. 6, the first enclosure structure 20 further has a second opening 24, and at least part of the second opening 24 faces an air vent of the electrical device 10 and is in communication with the air vent of the electrical device 10. The second opening 24 is located below the first opening 21. In this way, during operation of the electrical device 10, air in the environment may enter the air vent of the electrical device 10 through the second opening 24, so as to ensure the normal operation of the electrical device 10. Meanwhile, the second opening 24 located below the first opening 21 can prevent hot air discharged from the first opening 21 from entering the electrical device 10 through the second opening 24.

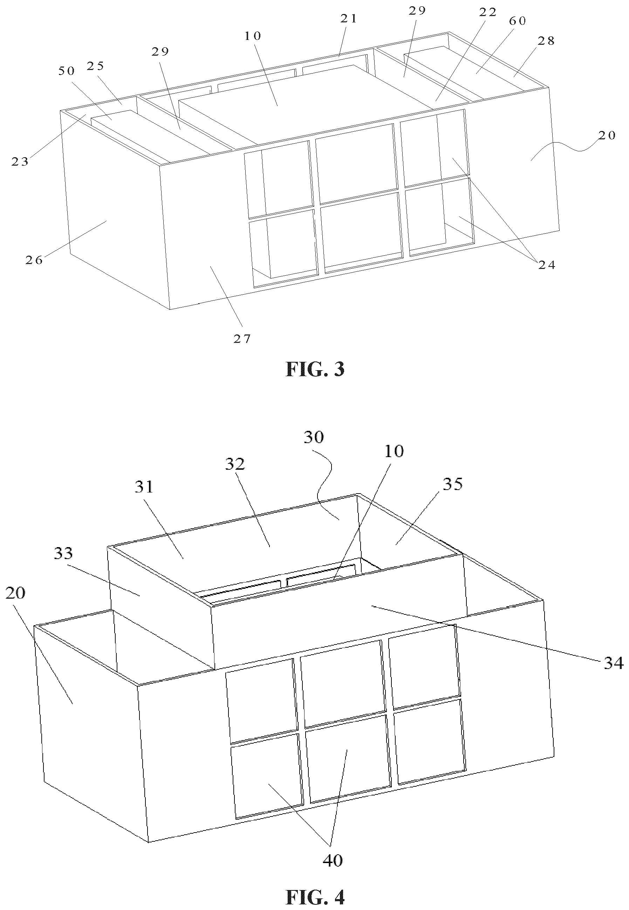

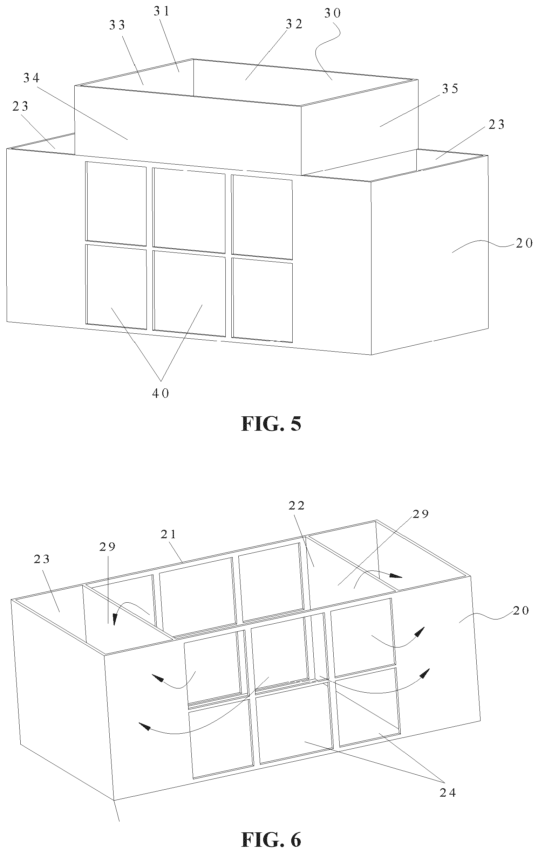

As shown in FIG. 4 and FIG. 5, the heat dissipation and flow guiding mechanism further includes a shielding structure 40. The shielding structure 40 is movably arranged on at least part of the second opening 24 to shield or expose the at least part of the second opening 24. In this way, when it is necessary to use the second opening 24 for air intake, the shielding structure 40 is controlled to expose the second opening 24 to ensure that air in the environment can enter the air vent of the electrical device 10 through the second opening 24. When the electrical device 10 is in a shutdown state, the shielding structure 40 may be controlled to shield the second opening 24, so as to prevent impurities and the like from entering the heat dissipation and flow guiding mechanism, thereby realizing dust prevention.

In the embodiment, the shielding structure 40 shields all of the second opening 24 and is in a fully-shielded state, so as to prevent the heat flow from entering an air inlet of a device arranged in the second accommodation cavity 23.

In an embodiment, the first enclosure structure 20 is detachably connected to or integrally formed with the second enclosure structure 30. In the embodiment, the first enclosure structure 20 is detachably connected to the second enclosure structure 30, and the heat dissipation and flow guiding mechanism has a transportation state in which the first enclosure structure 20 is connected to the second enclosure structure 30 by a hinge, and a use state in which the first enclosure structure 20 is connected to the second enclosure structure 30 by a fastener. In this way, when it is necessary to transport and transfer the heat dissipation and flow guiding mechanism, the first enclosure structure 20 is connected to the second enclosure structure 30 by a hinge, and thus the heat dissipation and flow guiding mechanism is in the transportation state. When the heat dissipation and flow guiding mechanism has been transported to a destination and needs to be used, the first enclosure structure 20 is connected to the second enclosure structure 30 by a fastener, and thus the heat dissipation and flow guiding mechanism is in the use state.

Specifically, the heat dissipation and flow guiding mechanism has two states, namely, a transportation state and a use state, so as to transport it.

In an embodiment, the fastener is a bolt and a nut.

As shown in FIG. 2 and FIG. 6, the first enclosure structure 20 includes an enclosure plate and a partition plate 29. The enclosure plate includes a first plate body 25, a second plate body 26, a third plate body 27 and a fourth plate body 28 which are connected end to end and surround to define an enclosure cavity. The partition plate 29 is arranged in the enclosure cavity to divide the enclosure cavity into the first accommodation cavity 22 and the second accommodation cavity 23. The second opening 24 is formed in the enclosure plate. In this way, the structure of the first enclosure structure 20 is simple and is easy to process and implement, thereby reducing the processing cost and processing difficulty of the first enclosure structure 20.

In an embodiment, the number of the second opening 24 is one. Alternatively, the number of the second openings 24 is more than one, and the second openings 24 are spaced apart from each other along at least one of a first direction h, a second direction w and a third direction L. In this way, the number and arrangement of the second openings 24 are flexible, so as to meet different operational requirements and working conditions, and also improve the processing flexibility for the personnel. Meanwhile, the multiple second openings 24 can increase the air intake amount of the electrical device 10 to meet air intake requirements of the electrical device 10.

In the embodiment, there are two groups of second openings 24, the two groups of second openings 24 are spaced apart along the second direction w. Each of the two groups of second openings 24 includes six second openings 24 which are spaced apart from each other along the third direction L and the first direction h, three of the six second openings 24 are located on an upper side, and the other three of the six second openings 24 are located on a lower side. The twelve second openings 24 may be shielded based on operational requirements.

It should be noted that the number of the second openings 24 is not limited thereto, and may be determined based on working conditions and operational requirements. In some embodiments, the number of the second openings 24 is two, three, four, five, six, ten, sixteen, or more.

It should be noted that the arrangement of the second openings 24 is not limited thereto, and may be determined based on working conditions and operational requirements.

In other embodiments not shown in the drawings, the multiple second openings are spaced apart from each other only along the first direction h.

In other embodiments not shown in the drawings, the multiple second openings are spaced apart from each other only along the second direction w.

In other embodiments not shown in the drawings, the multiple second openings are spaced apart from each other only along the third direction L.

In other embodiments not shown in the drawings, the multiple second openings are spaced apart from each other along the first direction h and the second direction w.

In other embodiments not shown in the drawings, the multiple second openings are spaced apart from each other along the first direction h and the third direction L.

In other embodiments not shown in the drawings, the multiple second openings are spaced apart from each other along the second direction w and the third direction L.

It should be noted that, the first direction h is a length direction of the first enclosure structure 20, the second direction w is a width direction of the first enclosure structure 20, and the third direction L is a height direction of the first enclosure structure 20.

In other embodiments not shown in the drawings, the shielding structures shield the second openings of the groups of second openings located in an upper row.

In other embodiments not shown in the drawings, the shielding structures shield the second openings of the groups of second openings located in a lower row.

In the embodiment, the first plate body 25 is opposite to and parallel to the third plate body 27, the second plate body 26 is opposite to and parallel to the fourth plate body 28, and the first plate body 25 is perpendicular to the second plate body 26.

In an embodiment, the number of the partition plate 29 is one. Alternatively, the number of the partition plates 29 is at least two, the at least two partition plates 29 are spaced apart from each other along at least one of the first direction h, the second direction w and the third direction L. In this way, the number of the partition plates 29 is flexible, so as to meet different operational requirements and working conditions, and also improve the processing flexibility for the personnel.

In the embodiment, the number of the partition plates 29 is two, and the two partition plates 29 are spaced apart from each other along the first direction h to form two second accommodation cavities 23.

It should be noted that the number of the partition plates 29 is not limited thereto and may be determined based on working conditions and operational requirements. In some embodiments, the number of the partition plates 29 is three, four, five or more.

In other embodiments not shown in the drawings, the multiple partition plates are spaced apart from each other only along the third direction L.

In other embodiments not shown in the drawings, the multiple partition plates are spaced apart from each other along the first direction h and the second direction w.

In other embodiments not shown in the drawings, the multiple partition plates are spaced apart from each other along the first direction h and the third direction L.

In other embodiments not shown in the drawings, the multiple partition plates are spaced apart from each other along the second direction w and the third direction L.

In other embodiments not shown in the drawings, the multiple partition plates are spaced apart from each other along the first direction h, the second direction w and the third direction L.

In an embodiment, the partition plate 29 faces the second plate body 26, and the air vent of the electrical device 10 faces the first plate body 25 and/or the third plate body 27. The second enclosure structure 30 is provided on the partition plate 29, part of the first plate body 25, and part of the third plate body 27. In this way, the position of the air vent can be arranged flexibly, so as to meet different operational requirements and working conditions, and also improve the processing flexibility for the personnel.

In the embodiment, the air vents of the electrical device 10 face the first plate body 25 and the third plate body 27 to ensure the ventilation volume of the electrical device 10.

In other embodiments not shown in the drawings, the air vent of the electrical device faces the first plate body.

In other embodiments not shown in the drawings, the air vent of the electrical device faces the third plate body.

In an embodiment, the second opening 24 is formed in the first plate body 25 and/or the third plate body 27. In this way, the position of the second opening can be arranged flexibly, so as to meet different operational requirements and working conditions, and also improve the processing flexibility for the personnel.

In the embodiment, the second openings 24 are formed in the first plate body 25 and the third plate body 27 to increase the air intake volume of the electrical device 10.

In other embodiments not shown in the drawings, the second opening 24 is formed in the first plate body 25.

In other embodiments not shown in the drawings, the second opening 24 is formed in the third plate body 27.

In an embodiment, the heat dissipation and flow guiding mechanism further includes a positioning assembly. The positioning assembly includes a first positioning part and a second positioning part. The first positioning part is provided on the first enclosure structure 20, and the second positioning part is provided on the second enclosure structure 30. One of the first positioning part and the second positioning part is a convex part, the other one of the first positioning part and the second positioning part is a concave part, and the convex part extends into the concave part and is limited and stopped by the concave part. In this way, during the assembly of the first enclosure structure 20 and the second enclosure structure 30, the above arrangement of the positioning assembly plays a role of positioning for the assembly, thereby improving the assembly accuracy of the first enclosure structure 20 and the second enclosure structure 30. Meanwhile, the structures of the first positioning part and the second positioning part can be flexibly arranged, so as to meet different operational requirements and working conditions, and also improve the processing flexibility for the personnel.

In the embodiment, at least part of a projection of the air vent of the electrical device 10 on the second opening 24 is located within the second opening 24, so as to ensure that sufficient air volume can be provided through the second opening 24, thereby improving the operation reliability of the electrical device 10.

In an embodiment, the first enclosure structure 20 is of an integrally formed structure or a split structure, so that the processing of the first enclosure structure 20 is flexible and diverse, so as to meet different operational requirements and working conditions, and also improve the processing flexibility for the personnel.

In the embodiment, the first enclosure structure 20 is of a split structure. In this way, it is convenient for workers to disassemble and assemble the first enclosure structure 20, thereby reducing the labor intensity of the workers, and the structure of the first enclosure structure 20 is simple and easy to process and implement.

In an embodiment, the second enclosure structure 30 is of an integrally formed structure or a split structure, so that the processing of the second enclosure structure 30 is flexible and diverse, so as to meet different operational requirements and working conditions, and also improve the processing flexibility for the personnel.

In the embodiment, the second enclosure structure 30 is of a split structure. In this way, it is convenient for workers to disassemble and assemble the second enclosure structure 30, thereby reducing the labor intensity of the workers, and the structure of the second enclosure structure 30 is simple and easy to process and implement.

As shown in FIG. 1, the second enclosure structure 30 includes a fifth plate body 32, a sixth plate body 33, a seventh plate body 34 and an eighth plate body 35 which are connected end to end. The fifth plate body 32 is opposite to and parallel to the seventh plate body 34, and the sixth plate body 33 is opposite to and parallel to the eighth plate body 35. The fifth plate body 32 is perpendicular to the sixth plate body 33.

A cabinet (not shown) is further provided according to the present application, including the heat dissipation and flow guiding mechanism described above.

As shown in FIG. 3, a transformer is arranged in the first accommodation cavity of the heat dissipation and flow guiding mechanism, and the heat dissipation and flow guiding mechanism is provided with two second accommodation cavities. An inverter 50 is arranged in one of the second accommodation cavities, and a ring main unit 60 is arranged in the other one of the second accommodation cavities.

In other embodiments not shown in the drawings, the number of the second accommodation cavities is two, an inverter is arranged in one of the second accommodation cavities, and a power distribution cabinet is arranged in the other one of the second accommodation cavities.

In another embodiment, the heat dissipation and flow guiding mechanism according to this embodiment differs from the heat dissipation and flow guiding mechanism according to the above embodiment in that the positions of the partition plates are different.

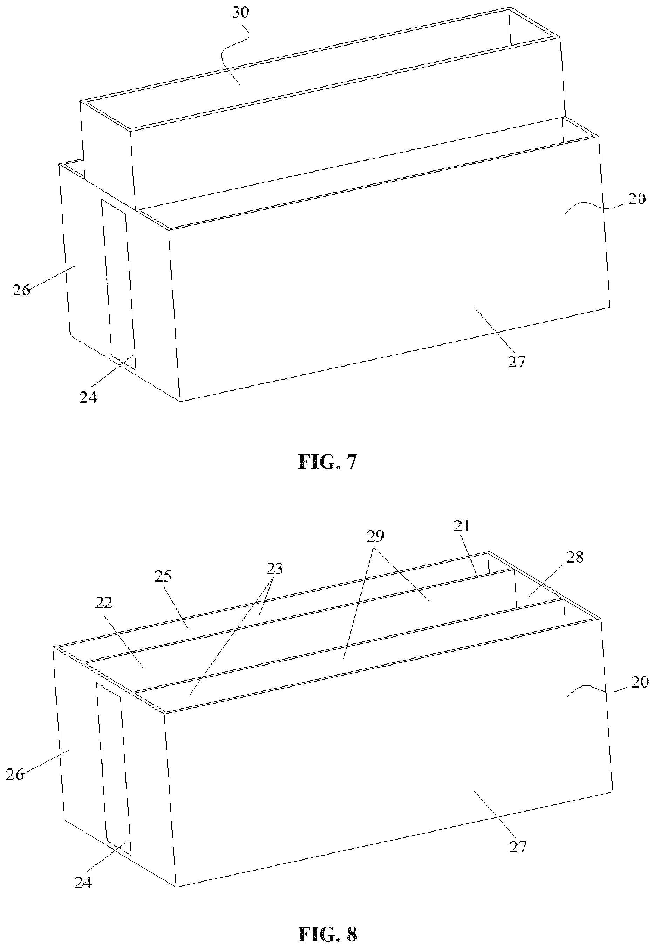

As shown in FIG. 7 and FIG. 8, the partition plate 29 faces the first plate body 25, and the air vent of the electrical device 10 faces the second plate body 26 and/or the fourth plate body 28. The second enclosure structure 30 is arranged on the partition plate 29, part of the second plate body 26, and part of the fourth plate body 28. In this way, the position of the air vent can be flexibly arranged, so as to meet different operational requirements and working conditions, and also improve the processing flexibility for the personnel.

In the embodiment, the air vents of the electrical device 10 face the second plate body 26 and the fourth plate body 28 to ensure the ventilation volume of the electrical device 10.

In other embodiments not shown in the drawings, the air vent of the electrical device 10 faces the second plate body 26.

In other embodiments not shown in the drawings, the air vent of the electrical device 10 faces the fourth plate body 28.

In an embodiment, the second opening 24 is formed in the second plate body 26 and/or the fourth plate body 28. In this way, the position of the second opening can be flexibly arranged, so as to meet different operational requirements and working conditions, and also improve the processing flexibility for the personnel.

In the embodiment, the second openings 24 are formed in the second plate body 26 and the fourth plate body 28 respectively to increase the air intake volume of the electrical device 10.

In other embodiments not shown in the drawings, the second opening 24 is formed in the second plate body 26.

In other embodiments not shown in the drawings, the second opening 24 is formed in the fourth plate body 28.

As shown in FIG. 8, two partition plates 29 are spaced apart from each other along the second direction w.

It can be seen from the above description that the above embodiments of the present application achieve the following technical effects.

The heat dissipation and flow guiding mechanism is configured for guiding the heat flow generated by the electrical device, and includes the first enclosure structure and the second enclosure structure. The first enclosure structure has the first accommodation cavity, and the first accommodation cavity has the first opening and is configured for mounting the electrical device. The second enclosure structure is located above the first enclosure structure and has the flow guiding cavity, and the first accommodation cavity is in communication with the flow guiding cavity through the first opening. In this way, the second enclosure structure is arranged at the above position to function as a "chimney", and the heat flow generated by the electrical device (such as a transformer) is guided by the guide effect of the chimney. After the electrical device (such as a transformer) is mounted in the first accommodation cavity, heat dissipated from a surface of the electrical device is dissipated through the first accommodation cavity, the first opening and the flow guiding cavity in sequence, so as to prevent the heat from dissipating around and affecting the normal operation of other devices, realizing the heat dissipation function of the heat dissipation and flow guiding mechanism, thereby preventing heat generated by the electrical device (such as a transformer) in the exposed state in the related art from affecting peripheral devices, and further improving the heat dissipation capability of the electrical device (such as a transformer) and the integrated all-in-one machine.

Apparently, the embodiments described above are only some of the embodiments of the present application, but not all of the embodiments. Based on the embodiments in the present application, all other embodiments obtained by those skilled in the art without creative efforts shall fall within the protection scope of the present application.

It should be noted that the terms used herein are only for describing specific embodiments and are not intended to limit the exemplary embodiments according to the present application. As used herein, unless explicitly indicated in the context, the singular form is also intended to include the plural form. In addition, it should be understood that when the terms "comprise" and/or "include" are used in the specification, they indicate the presence of features, steps, operations, devices, assemblies, and/or combinations thereof.

It should be noted that the terms "first", "second", and the like in the specification, claims, and the drawings of the present application are used to distinguish similar objects, and are not necessarily used to describe a specific order or sequence. It should be understood that the terms used in this way may be interchanged under appropriate circumstances, so that the embodiments of the present application described herein can be implemented in a sequence other than those illustrated or described herein.

The above description is only the preferred embodiments of the present application, and is not intended to limit the present application. For those skilled in the art, the present application may have various modifications and changes. Any modification, equivalent replacement, or improvement made within the spirit and principle of the present application shall be deemed to fall into the protection scope of the present application.

## Claims

1. A heat dissipation and flow guiding mechanism for guiding a heat flow generated by an electrical device (10), **characterized by** comprising:
a first enclosure structure (20) having a first accommodation cavity (22), wherein the first accommodation cavity (22) has a first opening (21) and is configured for mounting the electrical device (10); and
a second enclosure structure (30) located above the first enclosure structure (20) and having a flow guiding cavity (31), wherein the first accommodation cavity (22) is in communication with the flow guiding cavity (31) through the first opening (21).

2. The heat dissipation and flow guiding mechanism according to claim 1, wherein
the first enclosure structure (20) further has a second accommodation cavity (23), and the second accommodation cavity (23) and the first accommodation cavity (22) are arranged independently of each other; wherein
the number of the second accommodation cavity (23) is one; or, the number of the second accommodation cavities (23) is at least two, and the at least two second accommodation cavities (23) are arranged around the first accommodation cavity (22).

3. The heat dissipation and flow guiding mechanism according to claim 1, wherein a height of the first accommodation cavity (22) is greater than or equal to a height of the electrical device (10).

4. The heat dissipation and flow guiding mechanism according to claim 2, wherein the first enclosure structure (20) further has a second opening (24), and at least part of the second opening (24) is in communication with an air vent of the electrical device (10).

5. The heat dissipation and flow guiding mechanism according to claim 4, further comprising:
a shielding structure (40), which is movably provided on at least part of the second opening (24) to shield or expose the at least part of the second opening (24).

6. The heat dissipation and flow guiding mechanism according to claim 4, wherein the first enclosure structure (20) comprises:
an enclosure plate, comprising a first plate body (25), a second plate body (26), a third plate body (27) and a fourth plate body (28) which are connected end to end and surround to define an enclosure cavity, wherein the first plate body (25) and the third plate body (27) are arranged opposite to each other, and the second plate body (26) and the fourth plate body (28) are arranged opposite to each other; and
a partition plate (29), which is arranged in the enclosure cavity to divide the enclosure cavity into the first accommodation cavity (22) and the second accommodation cavity (23); wherein
the second opening (24) is formed in the enclosure plate.

7. The heat dissipation and flow guiding mechanism according to claim 6, wherein
the number of the second opening (24) is one; or
the number of the second openings (24) is more than one, and the second openings (24) are spaced apart from each other along at least one of a first direction, a second direction and a third direction.

8. The heat dissipation and flow guiding mechanism according to claim 6, wherein
the number of the partition plate (29) is one; or
the number of the partition plates (29) is at least two, and the at least two partition plates (29) are spaced apart from each other along at least one of a first direction, a second direction, and a third direction.

9. The heat dissipation and flow guiding mechanism according to claim 6, wherein
the partition plate (29) faces the second plate body (26), and the air vent of the electrical device (10) faces the first plate body (25) and/or the third plate body (27);
the second enclosure structure (30) is arranged on the partition plate (29), part of the first plate body (25), and part of the third plate body (27); and
the second opening (24) is formed in the first plate body (25) and/or the third plate body (27).

10. The heat dissipation and flow guiding mechanism according to claim 6, wherein
the partition plate (29) faces the first plate body (25), and the air vent of the electrical device (10) faces the second plate body (26) and/or the fourth plate body (28);
the second enclosure structure (30) is arranged on the partition plate (29), part of the second plate body (26), and part of the fourth plate body (28); and
the second opening (24) is formed in the second plate body (26) and/or the fourth plate body (28).

11. The heat dissipation and flow guiding mechanism according to claim 1, wherein an orthographic projection of the first opening (21) on the flow guiding cavity (31) is located within the flow guiding cavity (31).

12. The heat dissipation and flow guiding mechanism according to claim 4, wherein at least part of a projection of the air vent of the electrical device (10) on the second opening (24) is located within the second opening (24).

13. The heat dissipation and flow guiding mechanism according to claim 1, wherein
the second enclosure structure (30) comprises a fifth plate body (32), a sixth plate body (33), a seventh plate body (34) and an eighth plate body (35) which are connected end to end; and
the fifth plate body (32) and the seventh plate body (34) are arranged opposite to each other, and the sixth plate body (33) and the eighth plate body (35) are arranged opposite to each other.

14. The heat dissipation and flow guiding mechanism according to claim 1, wherein the first enclosure structure (20) and the second enclosure structure (30) are detachably connected or integrally formed.

15. A cabinet, **characterized by** comprising the heat dissipation and flow guiding mechanism according to any one of claims 1 to 14.

## Amended claims

### Amended claims in accordance with Rule 137(2) EPC.

1. A heat dissipation and flow guiding mechanism for guiding a heat flow generated by an electrical device (10), **characterized by** comprising:
a first enclosure structure (20) having a first accommodation cavity (22) configured for mounting the electrical device (10), wherein the first accommodation cavity (22) has a first opening (21) to allow the electrical device (10) to be in an exposed state; and
a second enclosure structure (30) located above the first enclosure structure (20) and having a flow guiding cavity (31), wherein the first accommodation cavity (22) is in communication with the flow guiding cavity (31) through the first opening (21).

2. The heat dissipation and flow guiding mechanism according to claim 1, wherein
the first enclosure structure (20) further has a second accommodation cavity (23), and the second accommodation cavity (23) and the first accommodation cavity (22) are arranged independently of each other; wherein
the number of the second accommodation cavity (23) is one; or, the number of the second accommodation cavities (23) is at least two, and the at least two second accommodation cavities (23) are arranged around the first accommodation cavity (22).

3. The heat dissipation and flow guiding mechanism according to claim 1, wherein a height of the first accommodation cavity (22) is greater than or equal to a height of the electrical device (10).

4. The heat dissipation and flow guiding mechanism according to claim 2, wherein the first enclosure structure (20) further has a second opening (24), and at least part of the second opening (24) is in communication with an air vent of the electrical device (10).

5. The heat dissipation and flow guiding mechanism according to claim 4, further comprising:
a shielding structure (40), which is movably provided on at least part of the second opening (24) to shield or expose the at least part of the second opening (24).

6. The heat dissipation and flow guiding mechanism according to claim 4, wherein the first enclosure structure (20) comprises:
an enclosure plate, comprising a first plate body (25), a second plate body (26), a third plate body (27) and a fourth plate body (28) which are connected end to end and surround to define an enclosure cavity, wherein the first plate body (25) and the third plate body (27) are arranged opposite to each other, and the second plate body (26) and the fourth plate body (28) are arranged opposite to each other; and
a partition plate (29), which is arranged in the enclosure cavity to divide the enclosure cavity into the first accommodation cavity (22) and the second accommodation cavity (23); wherein
the second opening (24) is formed in the enclosure plate.

7. The heat dissipation and flow guiding mechanism according to claim 6, wherein
the number of the second opening (24) is one; or
the number of the second openings (24) is more than one, and the second openings (24) are spaced apart from each other along at least one of a first direction, a second direction and a third direction.

8. The heat dissipation and flow guiding mechanism according to claim 6, wherein
the number of the partition plate (29) is one; or
the number of the partition plates (29) is at least two, and the at least two partition plates (29) are spaced apart from each other along at least one of a first direction, a second direction, and a third direction.

9. The heat dissipation and flow guiding mechanism according to claim 6, wherein
the partition plate (29) faces the second plate body (26), and the air vent of the electrical device (10) faces the first plate body (25) and/or the third plate body (27);
the second enclosure structure (30) is arranged on the partition plate (29), part of the first plate body (25), and part of the third plate body (27); and
the second opening (24) is formed in the first plate body (25) and/or the third plate body (27).

10. The heat dissipation and flow guiding mechanism according to claim 6, wherein
the partition plate (29) faces the first plate body (25), and the air vent of the electrical device (10) faces the second plate body (26) and/or the fourth plate body (28);
the second enclosure structure (30) is arranged on the partition plate (29), part of the second plate body (26), and part of the fourth plate body (28); and
the second opening (24) is formed in the second plate body (26) and/or the fourth plate body (28).

11. The heat dissipation and flow guiding mechanism according to claim 1, wherein an orthographic projection of the first opening (21) on the flow guiding cavity (31) is located within the flow guiding cavity (31).

12. The heat dissipation and flow guiding mechanism according to claim 4, wherein at least part of a projection of the air vent of the electrical device (10) on the second opening (24) is located within the second opening (24).

13. The heat dissipation and flow guiding mechanism according to claim 1, wherein
the second enclosure structure (30) comprises a fifth plate body (32), a sixth plate body (33), a seventh plate body (34) and an eighth plate body (35) which are connected end to end; and
the fifth plate body (32) and the seventh plate body (34) are arranged opposite to each other, and the sixth plate body (33) and the eighth plate body (35) are arranged opposite to each other.

14. The heat dissipation and flow guiding mechanism according to claim 1, wherein the first enclosure structure (20) and the second enclosure structure (30) are detachably connected or integrally formed.

15. A cabinet, **characterized by** comprising the heat dissipation and flow guiding mechanism according to any one of claims 1 to 14.
